# EUROPEAN PATENT SPECIFICATION

(11) **EP 0 741 900 B1**
(45) Date of publication and mention of the grant of the patent: **13.06.2001**
(21) Application number: 95936053.8
(22) Date of filing: 16.11.1995
(51) Int. Cl.: G11B 20/10, H04N 5/926

(54) **PLAYBACK DEVICE AND METHOD OF PLAYING BACK A BIT STREAM OF A STORAGE MEDIUM**
WIEDERGABEVORRICHTUNG UND VERFAHREN ZUR WIEDERGABE EINES BITSTROMS VON EINEM SPEICHERMEDIUM
DISPOSITIF DE REPRODUCTION ET PROCEDE DE REPRODUCTION D'UN TRAIN BINAIRE D'UN SUPPORT D'INFORMATIONS

(30) Priority: 29.11.1994 EP 94203466
(43) Date of publication of application: 13.11.1996
(73) Proprietor: Koninklijke Philips Electronics N.V., 5621 BA Eindhoven (NL); PHILIPS NORDEN AB, 164 85 Stockholm (SE)
(72) Inventor: KEESMAN, Gerrit, Johan, NL-5621 BA Eindhoven (NL); ANNEGARN, Marcellinus, Joseph, Johannes, Cornelis, NL-5621 BA Eindhoven (NL); VAN OTTERLOO, Petrus, Johannes, NL-5621 BA Eindhoven (NL)
(74) Representative: Schmitz, Herman Jan Renier
(86) International application number: IB9501016
(87) International publication number: WO9617346

(56) References cited:
- EP-A- 0 357 218
- EP-A- 0 429 139
- US-A- 5 134 476

## Description

The invention relates to a playback device for playing back a bit stream of a storage medium. The invention also relates to a method of playing back such a bit stream.

European patent application EP-A-0 357 218 discloses a playback device as defined in the preamble of claim 1. In this device, data is read from the medium at a predetermined constant rate and written into a buffer at this constant rate. The buffer is read at a data rate corresponding to the originally recorded signal. Depending on the fill state of the buffer, reading from the medium is stopped or resumed.

With the development of the MPEG standard for coding and compressing moving video picture signals, the storage of moving video pictures via storage media such as the optical disc and distribution via these media has become possible. MPEG1 provides the possibility of compressing a video signal to a bit stream having a bitrate of approximately 1.5 Mbit/sec. This bit stream may be recorded on the well-known Compact Disc so that it may comprise a video program having a duration of approximately 70 minutes of acceptable quality. Such a disc is referred to as CD-Video. The bitrate of the bit stream is equal to that of the conventional audio CD players. The CD-Video playback device therefore has a conventional structure, in other words, the disc has the customary speed of revolution and the read bit stream may be directly applied to an MPEG1 decoder.

Currently, optical discs having a higher storage density are being developed so that the duration will further increase and complete movies can be stored. The coding is also further refined. In "Information technology - Generic coding of moving pictures and associated audio information - Part 1: Systems", ISO/IEC DIS 13818-1, 1994, a provisional standard is described which is known as MPEG2. To achieve the envisaged duration and a satisfactory picture quality, a variable bitrate coding is being considered. Variable bitrate coding is possible within the MPEG2 standard. This means that a higher bitrate is temporarily allocated to the more complex picture scenes at the expense of simpler picture scenes. It has been found that variable bitrate coding renders a higher compression factor possible as compared with constant bitrate coding at the same perceptive picture quality. The profit gained is of the order of 30%. It is, however, troublesome to read a bit stream having a variable bitrate from an optical disc.

It is an object of the invention to provide a playback device which meets this drawback.

To this end, the playback device according to the invention comprises a buffer for buffering the read bit stream at the predetermined bitrate, means for reading the buffered bit stream in conformity with synchronization parameters accommodated in the bit stream, measuring means for measuring the fullness of the buffer and adapted to generate a read signal when a predetermined fullness of the buffer is reached, the read means being adapted to read a successive part of the bit stream in response to the read signal. It is thereby achieved that the buffer is burst-wise filled with the bit stream without specific actions of the decoder being required for this purpose. The decoder only needs to read the quantity of bits required for a given display period from the playback device. This an autonomous process which is performed by standard decoders. The playback device is therefore particularly suitable to be coupled to separate external decoders.

It is to be noted that a system employing variable bit rate encoding is known from United States Patent US-A-5,134,476. However, in this system the decoder input buffer is filled continuously at a constant rate and the buffer fullness signal controls the decoder rather than the data input operation to the buffer.

It is further to be noted that a playback device is known from European Patent Application EP 0 429 139, in which the storage medium is read burst-wise at a higher bitrate than that of the recorded bit stream. However, in this playback device the bitrate of the bit stream should be known in advance. Moreover, the bitrate of the bit stream is constant and lower than that at which the storage medium is read. In the playback device according to the invention the bitrate of the recorded bit stream may be at least temporarily higher.

In a favourable embodiment, the playback device comprises detection means for detecting the bitrate of the stored bit stream from the transmitted synchronization parameters and for reading the buffer at the detected bitrate. It is thereby achieved that the playback device supplies a bit stream at the same bitrate as that which was originally produced by the encoder. The output signal can now be directly applied to a conventional MPEG decoder.

The bitrate may be accommodated as such in the stored bit stream, for example in the form of the MPEG2 parameter program_mux_rate. This parameter is described on pages 50-51 of the above-mentioned publication ISO/IEC DIS 13818-1. The bitrate may also be derived from other MPEG parameters, for example the parameter decoding_time_stamp. This parameter is described on pages 27-33 of ISO/IEC DIS 13818-1.

Recording and detecting a variable bitrate is known per se from United States Patent US 4,985,784. Here, the bit stream is applied to a buffer upon recording. As soon as the buffer has reached a maximum fullness, the bit stream is written on the storage medium at a predetermined bitrate. When the buffer subsequently reaches a minimum fullness, writing of the bit stream alternates with suitable time intervals so that the bit stream is effectively recorded at a lower bitrate. The lower bitrate thus obtained is recorded on the storage medium. The recorded bitrate is detected in the playback device in order to reconstruct said suitable time intervals upon playback of the bit stream. The bit stream is also stored in a buffer and read picture-by-picture by the video decoder. However, the recorded bitrate has a completely different nature. In fact, the bitrate is not determined by the encoder but by the recording device. If the encoder produces a small number of bits per picture (low bitrate) while the buffer contents are written at the highest bitrate at that moment, then the relevant bit stream is also played back at this highest bitrate upon display. If this bit stream were directly applied to an MPEG decoder, its input buffer would overflow rapidly.

These and other aspects of the invention will be apparent from and elucidated with reference to the embodiments described hereinafter.

In the drawings:
Figs. 1 and 2 show embodiments of the playback device according to the invention.
Fig. 3 shows a possible division of a bit stream stored on a storage medium shown in Figs. 1 and 2.
Figs. 4 and 5 show possible embodiments of a bitrate detector shown in Fig. 2.

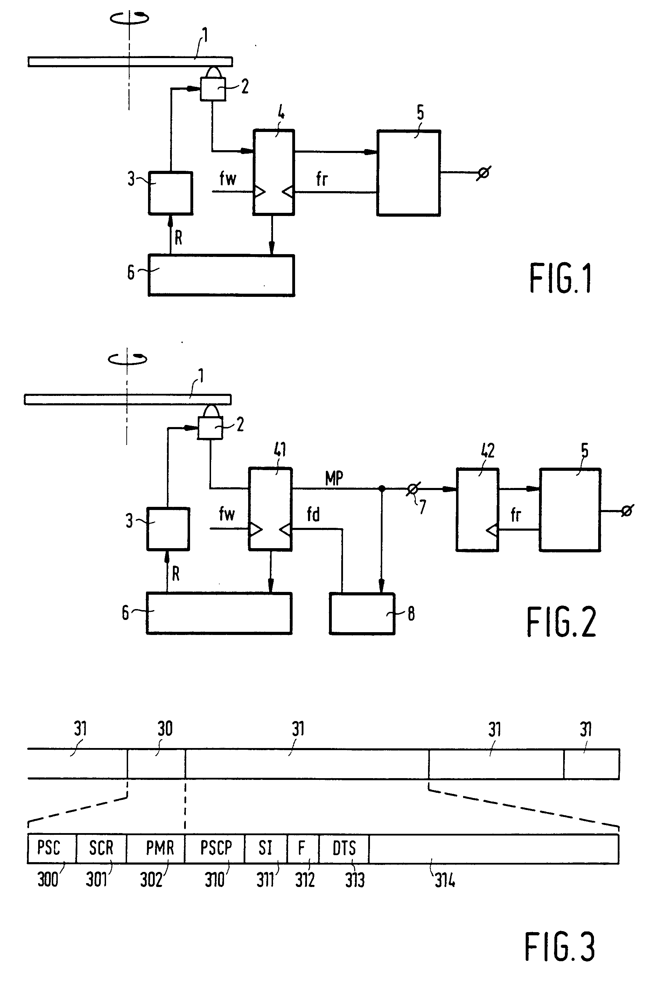

Fig. 1 shows a first embodiment of the playback device according to the invention. The playback device comprises a storage medium 1, for example an optical disc, a read head 2, a positioning circuit 3, a buffer 4, a decoder 5 and a measuring circuit 6.

A compressed video signal is recorded in the form of a bit stream on successive sectors of disc 1. The disc has a given speed of revolution and is scanned by the read head 2. The position of the read head is determined by positioning circuit 3. In response to a received read signal R, the positioning circuit activates the read head during a predetermined period which corresponds to a number of sectors of the disc. The bit stream in the sectors read is applied with a write clock signal f_{w} to buffer 4, a memory of the first-in first-out type. The write clock signal has a predetermined frequency in conformity with the storage density and speed of revolution of the disc. The buffer 4 is coupled to a decoder 5, for example an MPEG decoder as described in the above-mentioned publication ISO/IEC DIS 13818-1. The input buffer which forms part of a conventional MPEG decoder is constituted by a part of the buffer 4 in this embodiment. Decoder 5 periodically reads in further known manner, for example each picture period, the quantity of bits required for such a period from buffer 4. The clock signal fᵣ at which this is realised is the same clock signal as that at which a conventional MPEG decoder reads its input buffer. The way in which such a clock signal is generated is generally known and is therefore not further described.

While decoder 5 reads the buffer 4, the quantity of data in the buffer decreases. A measuring circuit 6 measuring the fullness of the buffer is coupled to the buffer 4. When a predetermined minimum value is reached, the measuring circuit generates the read signal R and applies it to the positioning circuit 3. In response to this read signal, buffer 4 receives a predetermined number of sectors of the disc from the read head. The positioning circuit is adapted to hold the position of the last sector which has been read in order to be able to position the read head on the subsequent sector. Measuring of the fullness and burst-wise reading the disc in response thereto is further described in detail in the above-mentioned European Patent Application EP 0 429 139.

Fig. 2 shows a second embodiment of a playback device according to the invention. This Figure uses the same reference numerals for the same elements as in Fig. 1. The embodiment is distinguished from the foregoing embodiment in that buffer 4 is divided into two different buffers 41 and 42. Buffer 42 constitutes the known input buffer of a conventional MPEG decoder. In other words, buffer 42 and decoder 5 jointly constitute a conventional MPEG decoder as described in ISO/IEC DIS 13818-1.

The playback device shown in Fig. 2 is further provided with a bitrate detector 8. This detector receives the bit stream MP which is read from buffer 41 and detects therefrom the bitrate of the bit stream as was originally produced by an encoder and is accommodated in the bit stream. The detected bitrate is applied in the form of a read clock signal f_{d} to the buffer 41. While the buffer 41 is being read in response thereto, the quantity of data in the buffer decreases. The measuring circuit 6 measures the fullness of buffer 41 and realises in the manner described above that the buffer is provided with new data. The bit stream MP which has been played back is therefore available at output 7 at the same bitrate as that at which the bit stream was originally produced by an encoder. This bit stream may be applied to a conventional MPEG decoder *via* output 7 without the risk of overflow or underflow of its input buffer 42. Since the MPEG decoder may be a separate apparatus, this embodiment is commercially very attractive.

Fig. 3 shows the division of an MPEG2 bit stream in so far as is important to understand the invention. The elementary bit streams (audio, video, possible further data) of an audiovisual program are each divided into PES packets 31. The series of PES packets is regularly interrupted by a pack_header 30. It can be recognized by the presence of a unique bit pattern, the pack_start_code 300. The pack_header further comprises, *inter alia* a parameter system_clock_reference 301. This is a synchronizing signal which constitutes the time base for the elementary signals (audio, video) of the audiovisual program. The pack_header further comprises a parameter program_mux_rate 302.

Each PES packet starts with a unique bit pattern, the packet_start_code_prefix 310. The packet further comprises a parameter stream_id 311 at predetermined bit positions and a plurality of flags 312. The parameter stream_id indicates the type of packet (audio, video). The flags indicate the presence of further synchronizing signals in the packet. Particularly, one of the flags indicates whether a parameter decoding_time_stamp 313 is accommodated in the packet. The encoded signal is accommodated in the remaining data field 314 of the PES packet. A video PES packet may comprise one or more encoded pictures, but also only a part of a picture. The decoding time stamp 313, if present, indicates at which instant of the time base the first picture in the video packet must be decoded.

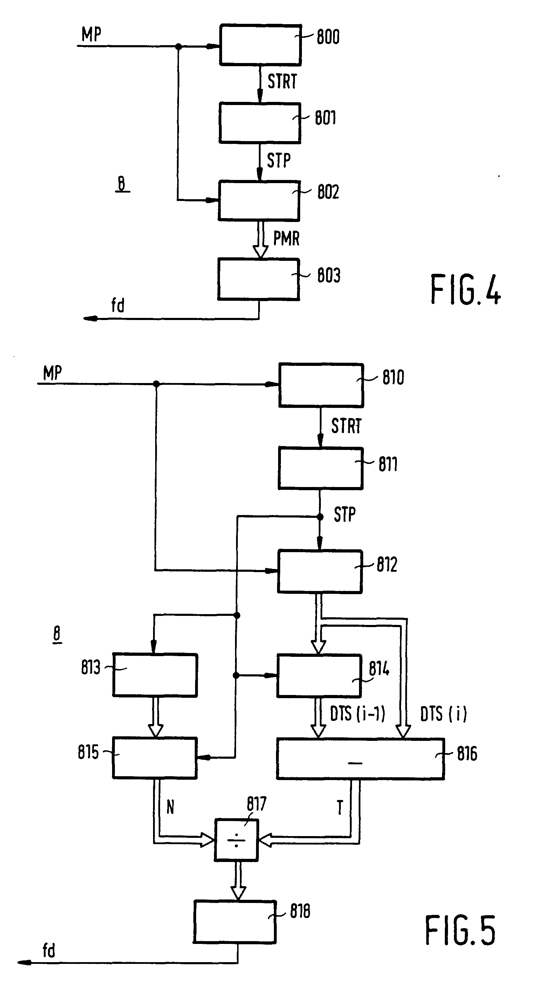

Fig. 4 shows a first embodiment of the bitrate detector 8 which is shown in Fig. 2. The bit stream MP is applied to a pack_start_code detector 800 and a shift register 802. Detector 800 is adapted to recognize the pack_start_code (300 in Fig. 3). Upon detection of the pack_start_code, detector 800 activates a counter 801 by means of a start signal STRT. In response thereto, the counter 801 counts down a predetermined number of bits and then applies a stop signal STP to shift register 802. The predetermined number of bits is such that upon the occurrence of the stop signal the parameter program_mux_rate (302 in Fig. 3) is present in the shift register 802. This parameter (PMR) is representative of the instantaneous bitrate of the MPEG bit stream. The parameter PMR is thus preserved and applied to a programmable oscillator 803. In response thereto, this oscillator generates the clock signal f_{d} at the relevant bitrate. Whenever a pack_start_code is received, the clock signal f_{d} is thus brought in conformity with the current value of the recorded parameter program_mux_rate.

Fig. 5 shows a second embodiment of the bitrate detector 8. The bit stream MP is now applied to a packet_start_code_prefix detector 810 and a shift register 812. Detector 810 is adapted to recognize the packet_start_code_prefix (310 in Fig. 3) in a PES packet. Upon detection of the code, detector 810 activates a counter 811 by means of a start signal STRT. In response thereto, the counter 811 counts down a predetermined number of bits and then applies a stop signal STP to shift register 812. The predetermined number of bits is such that upon the occurrence of the stop signal the decoding_time_stamp (313 in Fig. 3) is present in the shift register 812. The most recently received time stamp is denoted by DTS(i) in the Figure.

The stop signal STP which marks the presence of a decoding_time_stamp in the bit stream, is further applied to a bit counter 813 in order to reset this counter. Subsequently, the bit counter counts the number of bits in the bit stream MP. The stop signal is also applied to two registers 814 and 815. The previous time stamp is preserved in register 814 upon reception of a decoding_time_stamp. This previous time stamp is denoted by DTS(i-1) in the Figure. The number of bits N counted by bit counter 813 between the current time stamp DTS(i) and the previous time stamp DTS(i-1) is stored in register 815.

The time stamps DTS(i) and DTS(i-1) are applied to a subtracter circuit 816. The difference between the two time stamps represents a period of time T of the video signal, generally one or more picture periods of 40 msec. Apparently, as many bits are produced by the encoder during this period of time T as have been counted by the bit counter 813. Said number of bits is N and is stored in register 815. The quotient N/T is computed in a computing circuit 817 and applied to a programmable oscillator 818. In response thereto, this oscillator generates the clock signal f_{d} at a relevant bitrate. Whenever a decoding_time_stamp is received, the bitrate is recomputed in this way.

The invention has been explained hereinbefore with reference to a rotating optical storage medium. However, the invention is also applicable to other storage media, including magnetic tape.

The invention can be summarized as follows. The MPEG standard for compressing audio and video signals allows video compression with variable bitrate coding. It yields a profit of approximately 30% as compared with a constant bitrate. Variable bitrate compression provides the possibility of storing complete films on an optical disc. To play back the bit stream at a variable bitrate, the playback device comprises a buffer (4). This buffer is read by the MPEG decoder (5) and burst-wise filled with new data. In a possible embodiment, the bitrate is accommodated in the bit stream. The playback device comprises detection means (8) for detecting the bitrate and reads the buffer at this bitrate. The bit stream which has been read can be applied to a standard MPEG decoder.

## Claims

1. A playback device for playing back a bit stream of a storage medium (1), comprising:
- read means (2, 3) for reading the recorded bit stream at a predetermined bit rate (f_{w}),
- a buffer (4; 41, 42) for buffering the read bit stream at the predetermined bit rate (f_{w});
- measuring means (6) for measuring the fullness of the buffer and adapted to generate a read signal (R) when a predetermined fullness of the buffer is reached,
- the read means (2, 3) being adapted to read a successive part of the bit stream in response to the read signal,
characterized in that the playback device further comprises means (5;8) for reading the buffered bit stream at a variable bit rate (fᵣ, f_{d}) determined on the basis of synchronization parameters accommodated in the bit stream.

2. A device as claimed in Claim 1, characterized in that the playback device comprises detection means (8) for detecting the bit rate (f_{d}) of the stored bit stream from the synchronization parameters accommodated therein, and for reading the buffer (41) at the detected bit rate.

3. A device as claimed in Claim 1 or 2, characterized in that the recorded bit stream is an MPEG bit stream.

4. A device as claimed in Claim 3, characterized in that the synchronization parameters are constituted by the parameter program_mux_rate of the MPEG bit stream.

5. A device as claimed in Claim 3, characterized in that the synchronization parameters are constituted by the parameter decoding_time_stamp of the MPEG bit stream.

6. A method of playing back a bit stream of a storage medium (1), comprising the steps of:
- reading (2, 3) the recorded bit stream at a predetermined bit rate (f_{w}),
- buffering (4; 41, 42) the read bit stream at the predetermined bit rate (f_{w});
- measuring (6) the fullness of the buffer and generating a read signal (R) when a predetermined fullness of the buffer is reached,
- the step of reading (2, 3) the recorded bit stream being adapted to read a successive part of the bit stream in response to the read signal,
characterized in that the method further includes the step of reading (5;8) the buffered bit stream at a variable bit rate (fᵣ, f_{d}) determined on the basis of synchronization parameters accommodated in the bit stream.

7. A method as claimed in Claim 6, characterized in that the bit rate of the stored bit stream is detected from the synchronization parameters accommodated therein, and in that the buffer is read at the detected bit rate.

8. A method as claimed in Claim 6 or 7, characterized in that the recorded bit stream is an MPEG bit stream.

9. A method as claimed in Claim 8, characterized in that the synchronization parameters are constituted by the parameter program_mux_rate of the MPEG bit stream.

10. A method as claimed in Claim 8, characterized in that the synchronization parameters are constituted by the parameter decoding_time_stamp of the MPEG bit stream.

## Patentansprüche

1. Wiedergabeanordnung zum Wiedergeben eines Bitstroms eines Spiehcermediums (1), wobei diese Wiedergabeanordnung die nachfolgenden Elemente umfasst:
- Auslesemittel (2, 3) zum Auslesen des aufgezeichneten Bitstroms mit einer vorbestimmten Bitrate (f_{w}),
- einen Puffer (4; 41, 42) zum Puffern des ausgelesenen Bitstroms mit der vorbestimmten Bitrate (f_{w});
- Messmittel (6) zum Messen des Füllgrades des Puffers und dazu vorgesehen, ein Auslesesignal (R) zu erzeugen, wenn ein vorbestimmter Füllgrad des Puffers erreicht worden ist,
- wobei die Auslesemittel (2, 3) dazu vorgesehen sind, in Reaktion auf das Auslesesignal einen nachfolgenden Teil des Bitstroms auszulesen,
dadurch gekennzeichnet, dass die Wiedergabeanordnung weiterhin Mittel (5, 8) aufweist zum Auslesen des gepufferten Bitstroms mit einer variablen Bitrate (fᵣ, f_{d}), bestimmt auf Basis in dem Bitstrom untergebrachter Synchronisationsparameter.

2. Anordnung nach Anspruch 1, dadurch gekennzeichnet, dass die Wiedergabeanordnung Detektionsmittel (8) aufweist zum Detektieren der Bitrate (f_{d}) des gespeicherten Bitstroms aus den darin untergebrachten Synchronisationsparametern und zum Auslesen des Puffers (41) mit der detektierten Bitrate.

3. Anordnung nach Anspruch 1 oder 2, dadurch gekennzeichnet, dass der aufgezeichnete Bitstrom ein MPEG-Bitstrom ist.

4. Anordnung nach Anspruch 3, dadurch gekennzeichnet, dass die Synchronisationsparameter durch den Parameter "program_mux_rate" des MPEG-Bitstroms gebildet wird.

5. Anordnung nach Anspruch 3, dadurch gekennzeichnet, dass die Synchronisationsparameter durch den Parameter "decoding_time_stamp" des MPEG-Bistroms gebildet wird.

6. Verfahren zum Wiedergeben eines Bitstroms eines Speichermediums
(1) wobei dieses Verfahren die nachfolgenden Verfahrensschritte umfasst:
- das Auslesen (2, 3) des aufgezeichneten Bitstroms mit einer vorbestimmten Bitrate (f_{w}),
- das Puffern (4; 41, 42) des ausgelesenen Bitstroms mit der vorbestimmten Bitrate (f_{w});
- das Messen (6) des Füllgrades des Puffers und das Erzeugen eines Auslesesignals (R), wenn ein vorbestimmter Füllgrad des Puffers erreicht ist,
- wobei der Verfahrensschritt des Auslesens (2, 3) des aufgezeichneten Bitstroms dazu vorgesehen ist, in Reaktion auf das Auslesesignal einen nachfolgenden Teil des Bitstroms auszulesen,
dadurch gekennzeichnet, dass dieses Verfahren weiterhin den Verfahrensschritt des Auslesens (5; 8) des gepufferten Bitstroms mit einer variablen Bitrate (fᵣ, f_{d}) umfasst, bestimmt auf Basis der in dem Bitstrom untergebrachten Synchronisationsparameter.

7. Verfahren nach Anspruch 6, dadurch gekennzeichnet, dass die Bitrate des gespeicherten Bitstroms aus den darin untergebrachten Synchronisationsparametern detektiert wird, und dass der Puffer mit der detektierten Bitrate ausgelesen wird.

8. Verfahren nach Anspruch 6 oder 7, dadurch gekennzeichnet, dass der aufgezeichnete Bitstrom ein MPEG-Bitstrom ist.

9. Verfahren nach Anspruch 8, dadurch gekennzeichnet, dass die Synchronisationsparameter durch den Parameter "program_mux_rate" des MPEG-Bitstroms gebildet wird.

10. Verfahren nach Anspruch 8, dadurch gekennzeichnet, dass die Synchronisationsparameter durch den Parameter "decoding_time_stamp" des MPEG-Bitstroms gebildet wird.

## Revendications

1. Dispositif de reproduction pour reproduire un train binaire d'un support d'informations (1), comportant:
- des moyens de lecture (2, 3) pour lire le train binaire enregistré avec un débit binaire prédéterminé (f_{w}),
- un tampon (4; 41, 42) pour tamponner le train binaire lu avec le débit binaire prédéterminé (f_{w}),
- des moyens de mesure (6) pour mesurer le degré de remplissage du tampon et étant adaptés de manière à générer un signal de lecture (R) lorsqu'il est atteint un degré de remplissage prédéterminé du tampon,
- les moyens de lecture (2, 3) étant adaptés de manière à lire une partie successive du train binaire en réaction au signal de lecture,
caractérisé en ce que le dispositif de reproduction comporte encore des moyens (5; 8) pour lire le train binaire tamponné avec un débit binaire variable (fᵣ, f_{d}) déterminé sur la base de paramètres de synchronisation incorporés dans le train binaire.

2. Dispositif selon la revendication 1, caractérisé en ce que le dispositif de reproduction comporte des moyens de détection (8) pour détecter le débit binaire (f_{d}) du train binaire stocké à partir des paramètres de synchronisation y étant incorporés et pour lire le tampon (41) avec le débit binaire détecté.

3. Dispositif selon la revendication 1 ou 2, caractérisé en ce que le train binaire enregistré est un train binaire MPEG.

4. Dispositif selon la revendication 3, caractérisé en ce que les paramètres de synchronisation sont constitués par le paramètre "débit multiplexeur de programme" du train binaire MPEG.

5. Dispositif selon la revendication 3, caractérisé en ce que les paramètres de synchronisation sont constitués par le paramètre "horodateur de décodage" du train binaire MPEG.

6. Procédé pour reproduire un train binaire d'un support d'informations (1), comportant les étapes suivantes:
- la lecture (2, 3) du train binaire enregistré avec un débit binaire prédéterminé (f_{w}),
- le tamponnage (4; 41, 42) du train binaire lu avec le débit binaire prédéterminé (f_{w}),
- la mesure (6) du degré de remplissage du tampon et la génération d'un signal de lecture (R) lorsqu'il est atteint un degré de remplissage prédéterminé du tampon,
- l'étape de lecture (2, 3) du train binaire enregistré étant adaptée de manière à lire une partie successive du train binaire en réaction au signal de lecture,
caractérisé en ce que le procédé comporte encore l'étape de lecture (5; 8) du train binaire tamponné avec un débit binaire variable (fᵣ, f_{d}) déterminé sur la base de paramètres de synchronisation incorporés dans le train binaire.

7. Procédé selon la revendication 6, caractérisé en ce que le débit binaire du train binaire stocké est détecté à partir des paramètres de synchronisation y étant incorporés et en ce que le tampon est lu avec le débit binaire détecté.

8. Procédé selon la revendication 6 ou 7, caractérisé en ce que le train binaire enregistré est un train binaire MPEG.

9. Procédé selon la revendication 8, caractérisé en ce que les paramètres de synchronisation sont constitués par le paramètre "débit multiplexeur de programme" du train binaire MPEG.

10. Procédé selon la revendication 8, caractérisé en ce que les paramètres de synchronisation sont constitués par le paramètre "horodateur de décodage" du train binaire MPEG.
